(19) **Europäisches Patentamt**
**European Patent Office**
**Office européen des brevets**

(11) **EP 1 021 069 B1**

(12) **EUROPEAN PATENT SPECIFICATION**

(45) Date of publication and mention
of the grant of the patent:
**28.02.2007 Bulletin 2007/09**

(51) Int Cl.:
**H05B 6/70** (2006.01)

(21) Application number: **00300200.3**

(22) Date of filing: **12.01.2000**

(54) **Microwave oven with magnetic field sensor**

Mit einem Magnetfeldsensor versehenem Mikrowellenofen

Four à micro-ondes possédant un capteur à champ magnétique

(84) Designated Contracting States:
**DE FR GB NL**

(30) Priority: **14.01.1999 KR 19990000762**
**07.07.1999 KR 19990027329**

(43) Date of publication of application:
**19.07.2000 Bulletin 2000/29**

(73) Proprietor: **SAMSUNG ELECTRONICS CO., LTD.**
**Suwon-si,**
**Gyeonggi-do 442-742 (KR)**

(72) Inventors:
• **Shon, Jong-chull**
**Suwon-city, Kyungki-do (KR)**
• **Park, Tae-soo**
**Paldal-gu, Suwon-city, Kyungki-do (KR)**
• **Jeong, Joon-young**
**Songpa-gu, Seoul (KR)**
• **Jang, Bo-in**
**Kweonsun-gu, Suwon-city, Kyungki-do (KR)**
• **Lim, Dong-bin**
**Suwon-city, Kyungki-do (KR)**
• **Lee, Won-woo**
**Ansan-city, Kyungki-do (KR)**

(74) Representative: **Geary, Stuart Lloyd et al**
**Venner Shipley LLP**
**20 Little Britain**
**London EC1A 7DH (GB)**

(56) References cited:
**FR-A- 2 520 160**            **US-A- 4 303 818**

## Description

The present invention relates to a microwave oven including a waveguide and a sensor comprising a sensing loop projecting into the waveguide, one end of the sensing loop being grounded to the waveguide.

Microwave ovens are used to cook food by exciting water molecules in the food to heat the food. The microwaves are often generated by a magnetron and their intensity is varied in accordance with the characteristics of the food being cooked. That is, various factors such as the material, shape, etc. of the food determine microwave absorption and the required magnitude of microwave energy. Accordingly, microwave ovens often perform cooking while analyzing the food by various sensors.

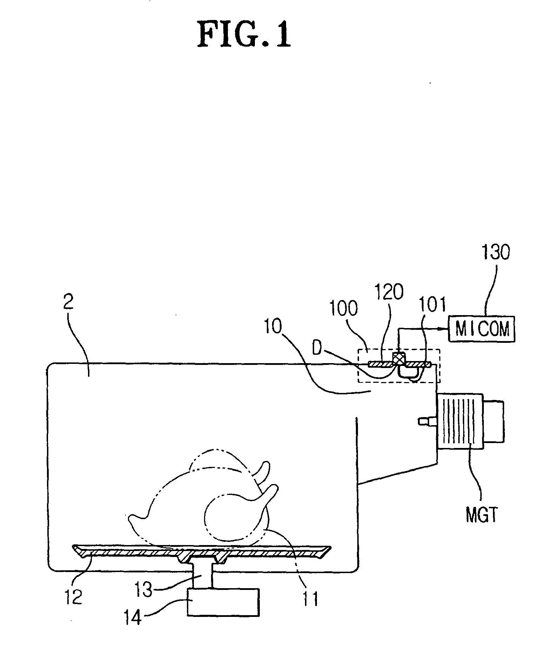

Figure 1 schematically shows a known microwave oven.

Referring to Figure 1, the conventional microwave oven includes a magnetron MGT for generating microwaves at approximately 2450MHz, a waveguide 10 for transmitting the microwaves generated from the magnetron MGT to food 11 in a cooking chamber 2 and a magnetic field detecting device 100 for detecting the cooking status of the food 11 by sensing microwaves reflected back through the waveguide 10.

The magnetic field detecting device 100 includes an antenna sensor 101, a diode D and a shield member 120. The antenna sensor 101, the diode D and the shield member 120 are fixed to a wall of the waveguide 10 such that the antenna sensor 101 protrudes into the waveguide 10.

The diode D is connected to one end of the antenna sensor 101 for applying the detected voltage of the standing wave detected by the antenna sensor 101 to a microcomputer 130. The microcomputer 130 determines the cooking status of the food 11 from the detected standing wave voltage received through the diode D.

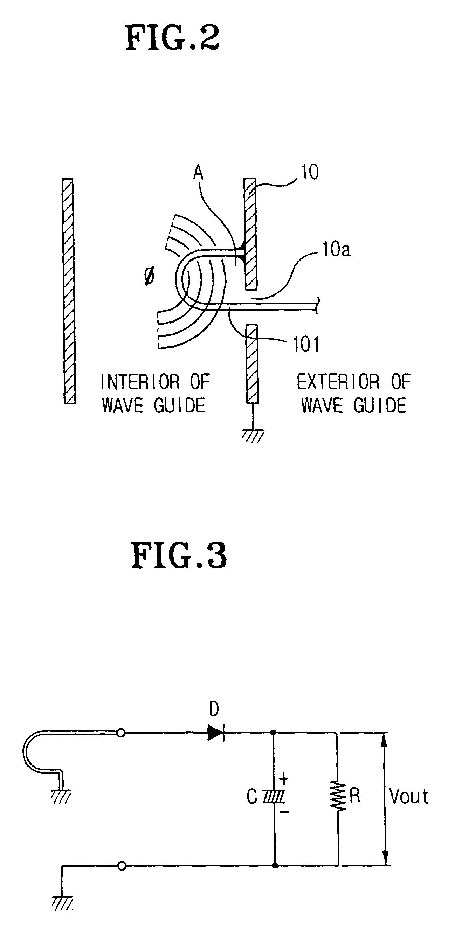

Figure 2 is a view illustrating the operating principle of a conventional magnetic field detecting device.

Referring to Figure 2, one end of the antenna sensor 101 is grounded on an inner wall of the waveguide 10 by welding, while the other end of the antenna sensor 101 is connected with the diode D through a hole 10a in the waveguide 10. The antenna sensor 101 is formed in a semicircular loop having an area A within the waveguide 10. A magnetic flux $\Phi$, which is formed by the standing wave in the waveguide 10, passes through the loop of the antenna sensor 101.

The microwaves generated by the magnetron MGT propagate along the waveguide 10 to the cooking chamber from where a portion are reflected back along the waeguide 10. The combination of the forward and reflected waves produces a standing wave in the waveguide 10.

The flux density enclosed by the loop is given by: -

$$B = \frac{\Phi}{A} \qquad\qquad (1)$$

According to Maxwell's equations, the electric field (E) produced by that changing magnetic flux $\Phi$ is related thereto by: -

$$\Delta E = \frac{dB}{dt} \qquad\qquad (2)$$

Figure 3 shows the circuit of the magnetic field detecting device shown in Figure 1.

Referring to Figure 3, the anode of the diode D is connected to the antenna sensor 101, and the cathode of the diode D is connected with an electrolytic capacitor C and a resistor R which are connected in parallel to ground.

The diode D rectifies the voltage signal produced by the loop and the rectified voltage is smoothed by the capacitor C to produce a dc voltage $V_{out}$ across the resistor R.

By employing the magnetic field detecting device having such an antenna sensor, a known microwave can adjust various cooking parameters in accordance with the shape or material of the food being cooked.

The known antenna sensor has a problem as follows. Referring to Figure 2, one end of the antenna sensor 101 is grounded by being soldered inner face of a wall of the waveguide 10. Consequently, the fixing of the antenna sensor 101 is difficult. Furthermore, it is difficult to control the orientation of the antenna sensor 101 resulting in variations in the effective area A of the loop and errors in the output voltage.

A microwave oven according to the present invention is characterised in that said end of the sensing loop is grounded to the waveguide from the outside of said waveguide.

The sensor may include a base member received in a hole in the waveguide with the ends of the sensing loop extending through the base member. A diode may be included in said loop on the waveguide side of the base member. The base member may have a loop supporting member projecting into the waveguide for supporting the loop. The base member may have a diode supporting wall structure for supporting the diode.

Alternatively, the base member may be cup-shaped and house a resistor and a capacitor connected in parallel between the ends of the loop, the base member being open at its waveguide end.

The loop may be necked and project into the waveguide through a slot. The slot may be in a base member received in a hole in the waveguide or in the waveguide itself.

The loop may be mounted to a printed circuit board and said end of the loop may then be grounded via a screw passing through the printed circuit board and into a wall of the waveguide.

Embodiments of the present invention will now be described, by way of example, with reference to Figures 4 to 8B of the accompanying drawings, in which: -

Figure 1 shows selected parts of a known microwave oven;
Figure 2 shows a loop-shaped sensor antenna in the waveguide of the oven of Figure 1:;
Figure 3 is a circuit diagram of the magnetic field sensor of Figure 1;
Figures 4A and 4B show a first antenna sensor unit according to the present invention;
Figure 5 shows a second antenna sensor unit according to the present invention
Figure 6 shows a third antenna sensor unit according to the present invention;
Figure 7 shows a fourth antenna sensor unit according to the present invention; and
Figures 8A and 8B show a fifth antenna sensor unit according to the present invention.

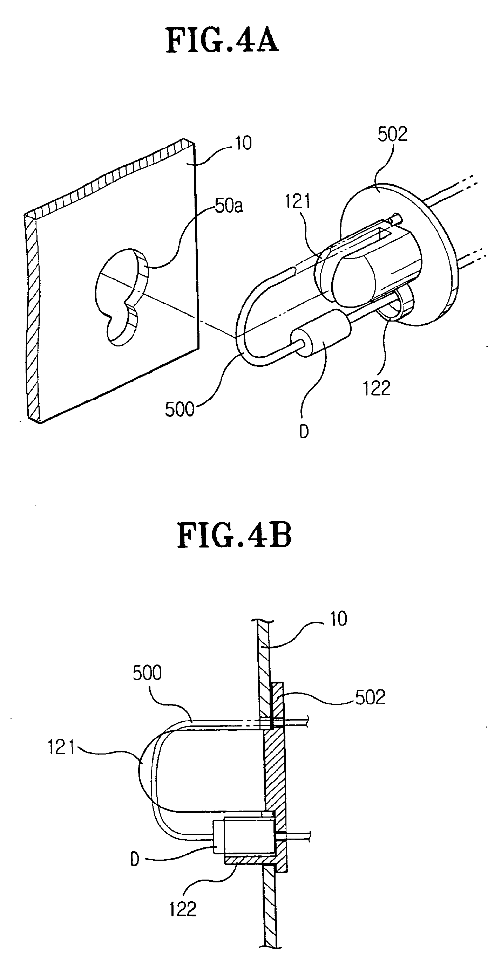

Referring to Figures 4A and 4B, a first magnetic field detecting device includes an antenna sensor 500 inserted into a waveguide 10, and a shield member 502 on which the antenna sensor 500 is mounted.

A middle portion of the antenna sensor 500 forms a semicircular loop, which is inserted into the waveguide 10 of a microwave oven through an inserting hole 50a formed on a wall of the waveguide 10.

The shield member 502 is formed such that the antenna sensor 500 can be inserted into a hole 50a in the waveguide 10 without microwaves leaking from the waveguide 10. Both ends of the loop of the antenna sensor 500 pass through the shield member 502. The shield member 502 has a protruding portion 121 for supporting the loop of the antenna sensor 500. The area of the loop within the waveguide 10 is preferably in the range 153mm$^2$ to 314mm$^2$.

A diode D is disposed in one end of the loop to rectify the standing wave voltage induced thereacross. The shield member 502 has a flange portion 122 formed thereon to receive the diode D. Accordingly, the diode D is positioned in the waveguide 10 while being supported by the flange portion 122 of the shield member 502.

Referring to Figure 4B, the hole 50a in the waveguide 10 corresponds with the protruding portion 121 and the flange portion 122 to air-tightly receive the protruding portion 121 and the flange portion 122 of the shield member 502.

Then by air-tightly inserting the protruding portion 121 and the flange portion 122 into the inserting hole 50a of the waveguide 10, the shield member 502 is assembled with waveguide 10, simply.

Here, in order for the protruding portion 121 and the flange portion 122 to be fixedly inserted through the hole 50a, the protruding portion 121 and the flange portion 122 have a slightly larger radius than the hole 50a and are made of an elastic material.

The antenna sensor 500 is installed by insering it into the hole 50a and one end of the loop is welded to the outside of the waveguide 10.

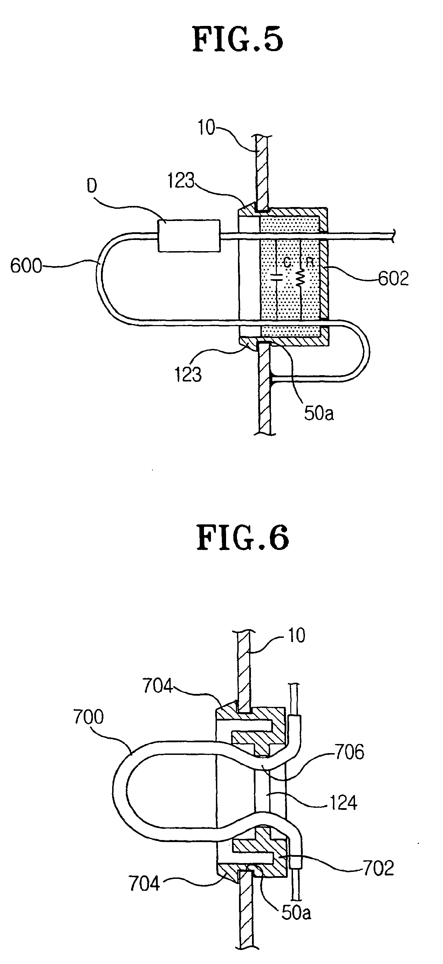

Referring to Figure 5, a second magnetic field detecting includes an antenna sensor 600 having a middle portion forming a loop, at one end of which is disposed a diode D, and a shield member 602 on which the antenna sensor 600 is mounted, which is air-tightly inserted into a hole 50a in the waveguide 10.

The antenna sensor 600 is inserted into the waveguide 10 through the hole 50a. The antenna sensor 600 protrudes into the waveguide 10 to detect the standing wave in the waveguide 10. The shield member 602 is air-tightly inserted into the hole 50a to support the antenna sensor 600 and prevent leakage of microwaves from the waveguide 10.

The shield member 602 is in the form of a cup. The ends of the antenna sensor 600 pass through the cup. The smoothing capacitor C and the parallel resistor R are mounted in the cup. Here, the capacitance of the capacitor C is preferably in the range 5 μF to 50 μF and the resistor R is preferably in the range 5kΩ to 50kΩ.

The cup has at least two locking portions 123 formed at its lip which make the cup easy to insert into the hole 50a but difficult to remove.

One end of the antenna sensor 600 is grounded by being welded to the outside of the waveguide 10. The other end of the antenna sensor 600 is connected to a signal input port of a microcomputer (not shown).

The capacitor C and the resistor R are contained within a potting compound so that they are not exposed to the inside of the waveguide 10. However, as shown in Figure 5, the diode D is disposed within the waveguide 10. Nevertheless, the diode D may be installed in the cup of the shield member 602 together with the capacitor C and the resistor R.

Referring to Figure 6, a third magnetic field detecting device has the same structure as that of the second preferred embodiment described above with reference to Figure 5, with respect to the feature that the antenna sensor 700 has a loop, and a shield member 702 is air-tightly inserted into a hole 50a in the waveguide 10 while the antenna sensor 700 is positioned and supported by the shield member 702.

The antenna sensor 700 is inserted into the waveguide 10 through the hole 50a and its middle portion forms a semicircular loop. The antenna sensor 700 is exposed standing wave in the waveguide 10 which induces a voltage across the sensor 700.

The shield member 702 is air-tightly inserted into the hole 50a in the waveguide 10 to prevent leakage of microwaves from the waveguide 10.

The shield member 702 has a slot 124 on the central portion thereof for supporting the antenna sensor 700. The antenna sensor 700 has a neck portion 706 which is held by the slot 124.

The antenna sensor 700 is made of general-purpose iron wire. It is more preferable, however, that the antenna sensor 700 be made of a high elasticity steel so as to enable the neck portion 706 to be tightly held by the slot 124.

Two locking portions 704 are formed on the lip of the shield member 702. The locking portions 704 are formed such that the sheild member 702 can be easy to install but difficult ro remove.

In the first and second embodiments, the diode D is disposed at one end of the loop portion of the antenna sensor. In the case of the second embodiment, the capacitor and resistor are mounted in the shield member. However, in the third preferred embodiment the diode, the capacitor, and the resistor mounted away from the antenna sensor 700, although they could be installed in the shield member 702 as an alternative.

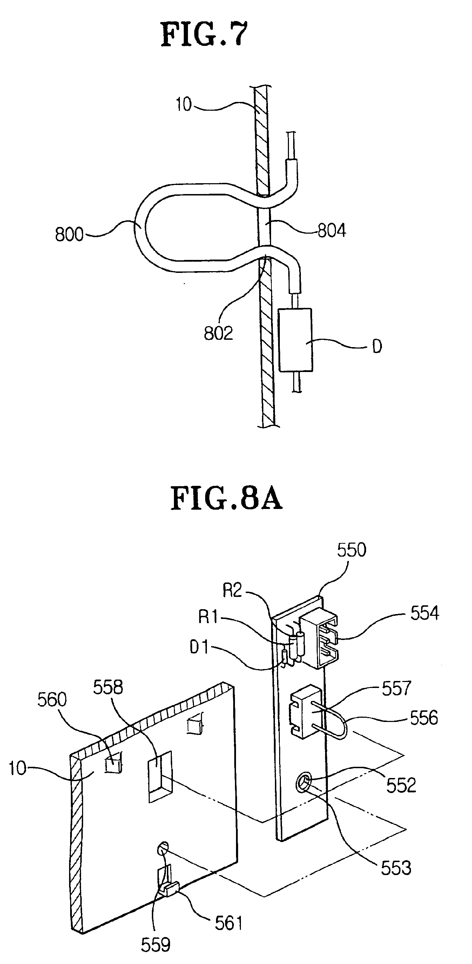

Referring to Figure 7, a magnetic detecting device has a middle portion of an antenna sensor 800 formed into a semicircular loop and the antenna sensor 800 is inserted into the waveguide 10 through a slot 804 in a the wall of the waveguide 10. The loop of the antenna sensor 800 is exposed to the standing wave in the waveguide 10 which induces a voltage across it. The antenna sensor 800 has a neck portion 802 corresponding to the hole 804. The antenna sensor 800 is made of a high elasticity steel, and by its high elasticity, the antenna sensor 800 is tightly held in the slot 804.

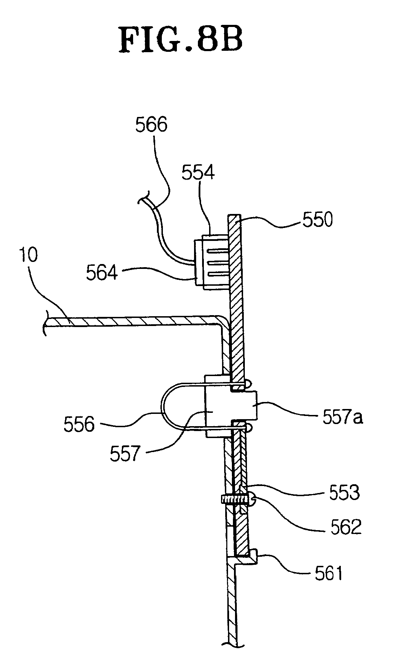

Referring to Figures 8A and 8B, a fifth magnetic field detecting device includes a printed circuit board 550 having a conductive tracks formed thereon, an antenna sensor 556 fixedly connected on the printed circuit board 550 and a shield member 557 fixing the antenna sensor 556 to the printed circuit board 550.

A screw coupling hole 552 is formed on a lower portion of the printed circuit board 550 and a ground terminal 553 is formed around the outer circumference of the screw coupling hole 552 and one end of the antenna sensor 556 is connected to the ground terminal 553 by a track on the printed circuit board 550. A screw 562 passes through the screw coupling hole 552 and into a hole 552 in the wall of the waveguide 10 and thereby grounds one end of the antenna sensor 556.

A diode D1 and two resistors R1, R2 are formed on a certain upper portion of the printed circuit board 550. A plug 554 connected with an in-line socket 564, connected to an input wire 566, is formed on another upper portion of the printed circuit board 550.

The wire connector 564 is connected to a signal input port of a microcomputer (not shown) through the input wire 566, to apply the output voltage of the magnetic field detecting device to the microcomputer.

At a centre portion of the printed circuit board 550, a shield member 557 is fixedly connected with the antenna sensor 556. The middle portion of the antenna sensor 556 forms a loop and both ends of the loop are passed through the shield member 557 and are soldered on the back face of the printed circuit board 550. One soldered end of the antenna sensor 556 is connected with the ground terminal 553 through a track on the printed circuit board 550, while the other soldered end of the antenna sensor 556 is connected to the diode D1 through a track on the printed circuit board 550.

The shield member 557 has two hook members 557a on the back thereof for engaging the printed circuit board 550.

The waveguide 10 has a hole 558 formed therein, through which the antenna sensor 556 and the shield member 557 are inserted. The waveguide 10 also has a plurality of projections 560 protruding from the outside of the waveguide 10 to position the printed circuit board 550 correctly with respect to the waveguide 10. A locking projection 561 protrudes from a lower part of the outside of the waveguide 10 and receive the lower end of the printed circuit board 550 to hold the printed circuit board 550 with respect to the waveguide 10.

Accordingly, in the fifth magnetic field detecting device, the shield member 557 receiving the antenna sensor 556 and the connector terminal 554 are connected on the printed circuit board 550, while the diode D and the two resistors R1, R2 are connected by tracks on the printed circuit board 550. Also, a screw coupling hole 553 is formed on the lower portion of the printed circuit board 550. The waveguide 10 has a plurality of guiding projections 560 protruding therefrom to fit the printed circuit board 550 and a locking projection 561 which is cut away and bent from the wall surface of the waveguide 10.

Accordingly, as the printed circuit board 550 is connected with the waveguide 10, the printed circuit board 550 is guided by the guiding projections 560 and is fitted into the locking projection 561 of the waveguide 10. In this situation, the antenna sensor 556 fixed on the shield member 557 is inserted through the hole 558 in the waveguide 10.

Then by screwing the screw 562 through the screw coupling hole 553 of the printed circuit board 550 and the coupling hole 559 of the waveguide 10, the printed circuit board 550 is finally connected with the waveguide 10.

**Claims**

1.  A microwave oven including a waveguide (10) and a sensor comprising a sensing loop (500; 556; 600; 700; 800) projecting into the waveguide (10), one end of the sensing loop (500; 556; 600; 700; 800) being grounded to the waveguide (10), **characterised in that** said end of the sensing loop (500; 556; 600; 700; 800) is grounded to the waveguide (10) from the outside of said waveguide.

2.  A microwave oven according to claim 1, wherein the sensor includes a base member (502; 557; 602) received in a hole in the waveguide (10), the ends of the sensing loop (500; 556; 600) extending through the base member (502; 557; 602).

3.  A microwave oven according to claim 2, wherein a diode (D) is included in said loop (500; 600) on the waveguide side of the base member (502; 602).

4.  A microwave oven according to claim 3, wherein the base member (502) has a loop supporting member (121) projecting into the waveguide (10) for supporting the loop (500).

5.  A microwave oven according to claim 3 or 4, wherein the base member (502) has a diode supporting wall structure (122) for supporting the diode (D).

6.  A microwave oven according to claim 3, wherein the base member (602) is cup-shaped and houses a resistor (R) and a capacitor (C) connected in parallel between the ends of the loop (600), the base member (602) being open at its waveguide end.

7.  A microwave oven according to claim 1, wherein the loop (700; 800) is necked and projects into the waveguide through a slot (124; 804).

8.  A microwave oven according to claim 7, wherein the slot (124) is in a base member (702) received in a hole (50a) in the waveguide (10).

9.  A microwave oven according to claim 1, wherein the loop (556) is mounted to a printed circuit board (550) and said end of the loop (556) is grounded via a screw passing through the printed circuit board (550) and into a wall of the waveguide (10).

10. A microwave oven according to claim 1, wherein the sensor is an antenna (556) including a loop portion which is protruded into a waveguide (10) of the microwave oven, and a wire whose one end is grounded at the waveguide, the wire of the antenna sensor being grounded at an outer side of the waveguide.

11. The microwave oven as claimed in claim 10, further comprising a shield member (557) for fixing the antenna sensor in a manner that the loop portion of the antenna sensor is protruded into the waveguide, and for fixing one end of the wire in a manner that the one end of the wire is grounded at the outer side of the waveguide.

12. The microwave oven as claimed in claim 11, wherein the shield member includes a projection having a hole thereon for fixing the loop portion of the antenna sensor.

13. The microwave oven as claimed in claim 11, wherein the shield member includes a case body in which a magnetic field voltage detecting circuit element is received and is processed by molding.

14. The microwave oven as claimed in claim 10, wherein the waveguide includes an inserting hole through which the antenna sensor is received in the waveguide, and the antenna sensor further includes a neck portion which is fixed in the inserting hole of the waveguide.

**15.** The microwave oven as claimed in claim 14, further comprising a shield member having a hole formed thereon for supporting the neck portion of the antenna sensor.

**16.** The microwave oven as claimed in claim 10, further comprising a printed circuit board for fixing the antenna sensor in a manner that the loop portion of the antenna sensor is protruded into the waveguide, and for fixing the wire by grounding the wire.

**17.** The microwave oven as claimed in claim 18, wherein the printed circuit board includes:

a screw hole through which a screw is passed through so as to fasten the printed circuit board onto an outer side of the waveguide and to ground the antenna sensor at the waveguide;
a coupling hole formed on the outer side of the waveguide through which the screw is fastened;
a guiding portion for guiding the printed circuit board while the printed circuit board is fitted into the waveguide; and
a locking portion for fixing the printed circuit board which is fitted in the waveguide.


**Patentansprüche**

**1.** Mikrowellenofen umfassend einen Wellenleiter (10) und einen Sensor umfassend eine Sensorschleife (500, 556, 600, 700, 800), welche sich in den Wellenleiter (10) hereinerstreckt, wobei ein Ende der Sensorschleife (500, 556, 600, 700, 800) an dem Wellenleiter (10) geerdet ist, **dadurch gekennzeichnet, dass** das Ende der Sensorschleife (500, 556, 600, 700,800) an dem Wellenleiter (10) von der Außenseite des Wellenleiters aus geerdet ist.

**2.** Mikrowellenofen gemäß Anspruch 1, wobei der Sensor ein Basiselement (502, 557, 602) umfasst, das in einem Loch des Wellenleiters (10) aufgenommen ist, wobei sich die Enden der Sensorschleife (500, 556, 600) durch das Basiselement (502, 557, 602) hindurch erstrecken.

**3.** Mikrowellenofen gemäß Anspruch 2, wobei eine Diode (D) in der Schleife (500, 600) an der Wellenleiterseite des Basiselementes (502, 602) aufgenommen ist.

**4.** Mikrowellenofen gemäß Anspruch 3, wobei das Basiselement (502) ein Schleifenhalteelement (121) aufweist, das zum Halten der Schleife (500) in den Wellenleiter (10) herein ragt.

**5.** Mikrowellenofen gemäß Anspruch 3 oder 4, wobei das Basiselement (502) eine Dioden haltende Wandstruktur (122) zum Halten der Diode (D) aufweist.

**6.** Mikrowellenofen gemäß Anspruch 3, wobei das Basiselement (602) becherförmig ist und einen Widerstand (R) und einen Kondensator (C) aufnimmt, die parallel zwischen den Enden der Schleife (600) verbunden sind, wobei das Basiselement (602) an seinem Wellenleiterende offen ist.

**7.** Mikrowellenofen gemäß Anspruch 1, wobei die Schleife (700, 800) einen Hals aufweist und sich in den Wellenleiter durch einen Schlitz (124, 804) herein erstreckt.

**8.** Mikrowellenofen gemäß Anspruch 7, wobei der Schlitz (124) in einem Basiselement (702) liegt, das in einem Loch (50a) des Wellenleiters (10) aufgenommen ist.

**9.** Mikrowellenofen gemäß Anspruch 1, wobei die Schleife (556) an einer gedruckten Platine (550) montiert ist und das Ende der Schleife (556) über eine Schraube geerdet ist, die durch die gedruckte Platine (550) hindurch und in eine Wand des Wellenleiters (10) hinein geht.

**10.** Mikrowellenofen gemäß Anspruch 1, wobei der Sensor eine Antenne (556) umfassend einen Schleifenabschnitt, der sich in einen Wellenleiter (10) des Mikrowellenofens herein erstreckt, und eine Leitung, deren eines Ende an dem Wellenleiter geerdet ist, ist, wobei die Leitung des Antennensensors an der äußeren Seite des Wellenleiters geerdet ist.

**11.** Mikrowellenofen gemäß Anspruch 10, weiterhin umfassend ein Abschirmelement (557) zum Befestigen des Antennensensors auf eine solche Weise, dass sich der Schleifenabschnitt des Antennensensors in den Wellenleiter hereinerstreckt und zum Befestigen eines Endes des Drahtes auf eine Weise, dass das eine Ende des Drahtes an der äußeren Seite des Wellenleiters geerdet ist.

12. Mikrowellenofen gemäß Anspruch 11, wobei das Abschirmelement eine Ausstülpung umfasst, die daran ein Loch zum Befestigen des Schleifenabschnittes des Antennensensors aufweist.

13. Mikrowellenofen gemäß Anspruch 11, wobei das Abschirmelement einen Gehäusekörper umfasst, in dem ein Magnetfeld Spannungsdetektionsschaltkreiselement aufgenommen ist und durch Formen bearbeitet ist.

14. Mikrowellenofen gemäß Anspruch 10, wobei der Wellenleiter ein Einsetzungsloch umfasst, durch welches hindurch der Antennensensor in dem Wellenleiter aufgenommen ist, und der Antennensensor weiterhin einen Halsabschnitt umfasst, der in dem Einsetzungsloch des Wellenleiters befestigt ist.

15. Mikrowellenofen gemäß Anspruch 14, weiterhin umfassend ein Abschirmelement, in dem ein Loch zum Halten des Halsabschnittes des Antennensensors eingeformt ist.

16. Mikrowellenofen gemäß Anspruch 10, weiterhin umfassend eine gedruckte Platine zum Befestigen des Antennensensors auf eine Weise, dass sich der Schleifenabschnitt des Antennensensors in den Wellenleiter herein erstreckt und zum Befestigen des Drahtes durch Erden des Drahtes.

17. Mikrowellenofen gemäß Anspruch 18, wobei die gedruckte Platine umfasst:

ein Schraubenloch, durch welches eine Schraube hindurch geht, um die gedruckte Platine an einer äußeren Seite des Wellenleiters zu befestigen und um den Antennensensor an dem Wellenleiter zu erden;
ein Kopplungsloch, das an der äußeren Seite des Wellenleiters geformt ist, durch welches hindurch die Schraube befestigt wird;
einen Führungsabschnitt zum Führen der gedruckten Platine während die gedruckte Platine in den Wellenleiter eingepasst ist; und
ein Verriegelungsabschnitt zum Befestigen der gedruckten Platine, welche an dem Wellenleiter befestigt ist.

## Revendications

1. Four à micro-ondes comprenant un guide d'ondes (10) et un détecteur comportant une boucle de détection (500 ; 556 ; 600 ; 700 ; 800) dépassant dans le guide d'ondes (10), une extrémité de la boucle de détection (500 ; 556 ; 600 ; 700 ; 800) étant mise à la masse sur le guide d'ondes (10), **caractérisé en ce que** ladite extrémité de la boucle de détection (500 ; 556 ; 600 ; 700 ; 800) est mise à la masse sur le guide d'ondes (10) à partir de l'extérieur dudit guide d'ondes.

2. Four à micro-ondes selon la revendication 1, dans lequel le détecteur comprend un élément de base (502 ; 557 ; 602) reçu dans un trou percé dans le guide d'ondes (10), les extrémités de la boucle de détection (500 ; 556 ; 600) traversant l'élément de base (502 ; 557 ; 602).

3. Four à micro-ondes selon la revendication 2, dans lequel une diode (D) est incluse dans la dite boucle (500 ; 600) du côté du guide d'ondes de l'élément de base (502 ; 602).

4. Four à micro-ondes selon la revendication 3, dans lequel l'élément de base (502) comporte un élément de support de boucle (121) dépassant dans du guide d'ondes (10) pour supporter la boucle (500).

5. Four à micro-ondes selon la revendication 3 ou 4, dans lequel l'élément de base (502) comporte une structure de paroi (122) de support de diode pour supporter la diode (D).

6. Four à micro-ondes selon la revendication 3, dans lequel l'élément de base (602) est en forme de coupelle et loge une résistance (R) et un condensateur (C) connectés en parallèle entre les extrémités de la boucle (600), l'élément de base (602) étant ouvert à son extrémité du côté du guide d'ondes.

7. Four à micro-ondes selon la revendication 1, dans lequel la boucle (700 ; 800) est resserrée et s'avance dans le guide d'ondes à travers une fente (124 ; 804).

8.  Four à micro-ondes selon la revendication 7, dans lequel la fente (124) se trouve dans un élément de base (702) reçu dans un trou (50a) dans le guide d'ondes (10).

9.  Four à micro-ondes selon la revendication 1, dans lequel la boucle (556) est montée sur une carte de circuit imprimé (550) et ladite extrémité de la boucle (556) est mise à la masse par l'intermédiaire d'une vis traversant la carte de circuit imprimé (550) et la paroi du guide d'ondes (10).

10. Four à micro-ondes selon la revendication 1, dans lequel le détecteur est une antenne (556) comprenant une partie en boucle qui s'avance dans le guide d'ondes (10) du four à micro-ondes, et un fil dont une extrémité est mise à la masse sur le guide d'ondes, le fil du détecteur à antenne étant mis à la masse sur un côté externe du guide d'ondes.

11. Four à micro-ondes selon la revendication 10, comportant en outre un élément de blindage (557) pour fixer le détecteur à antenne de façon à ce que la partie de boucle du détecteur à antenne s'avance dans le guide d'ondes, et pour fixer une extrémité du fil de façon à ce que cette extrémité du fil soit mise à la masse à l'extérieur du guide d'ondes.

12. Four à micro-ondes selon la revendication 11, dans lequel l'élément de blindage comprend une saillie percée d'un trou pour fixer la partie de boucle du détecteur à antenne.

13. Four à micro-ondes selon la revendication 11, dans lequel l'élément de blindage comprend un corps de boîtier qui reçoit un élément de circuit de détection de tension de champ magnétique et le traite par moulage.

14. Four à micro-ondes selon la revendication 10, dans lequel le guide d'ondes comprend un trou d'insertion à travers lequel le détecteur à antenne est reçu dans le guide d'ondes, et le détecteur à antenne comprend en outre une partie resserrée qui est fixée dans le trou d'insertion du guide d'ondes.

15. Four à micro-ondes selon la revendication 14, comportant en outre un élément de blindage percé d'un trou pour supporter la partie resserrée du détecteur à antenne.

16. Four à micro-ondes selon la revendication 10, comportant en outre une carte de circuit imprimé pour fixer le détecteur à antenne de telle façon que la partie en boucle du détecteur à antenne s'avance dans le guide d'ondes et pour fixer le fil en le mettant à la masse.

17. Four à micro-ondes selon la revendication 18 dans lequel la carte de circuit imprimé comprend :

    un trou de vis à travers lequel est passée une vis afin de fixer la carte de circuit imprimé sur un côté externe du guide d'ondes et de mettre à la masse le détecteur à antenne sur le guide d'ondes ;
    un trou de couplage formé sur le côté externe du guide d'ondes à travers lequel la vis est fixée ;
    une partie de guidage pour guider la carte de circuit imprimé pendant que la carte de circuit imprimé est logée dans le guide d'ondes ; et
    une partie de verrouillage pour fixer la carte de circuit imprimé qui est logée dans le guide d'ondes.

# FIG.1

# FIG.2

A

10

10a

101

Ø

INTERIOR OF
WAVE GUIDE

EXTERIOR OF
WAVE GUIDE

# FIG.3

D

C

R

Vout

# FIG.4A

# FIG.4B

# FIG.5

# FIG.6

# FIG.7

10

800

804

802

D

# FIG.8A

550

R2

R1

554

D1

557

558

556

560

10

552

553

561

559

# FIG.8B